# EUROPÄISCHE PATENTSCHRIFT

(11) **EP 2 912 077 B1**
(45) Veröffentlichungstag und Bekanntmachung des Hinweises auf die Patenterteilung: **28.03.2018**
(21) Anmeldenummer: 13783887.6
(22) Anmeldetag: 23.10.2013
(51) Int. Cl.: C08F 220/06, C08F 220/34, C04B 24/00

(54) **VERFLÜSSIGER MIT KATIONISCHEN SEITENKETTEN OHNE POLYETHERSEITENKETTEN**
LIQUIDIZER HAVING CATIONIC SIDE CHAINS WITHOUT POLYETHER SIDE CHAINS
DISPOSITIF DE LIQUÉFACTION AVEC CHAÎNES LATÉRALES CATIONIQUES SANS CHAÎNES LATÉRALES DE POLYÉTHER

(30) Priorität: 29.10.2012 EP 12190373
(43) Veröffentlichungstag der Anmeldung: 02.09.2015
(73) Patentinhaber: Sika Technology AG, 6340 Baar (CH)
(72) Erfinder: HAMPEL, Christina, CH-5406 Rütihof (CH); ZIMMERMANN, Jörg, CH-8400 Winterthur (CH); ALSHEMARI, Jabbar, CH-8052 Zürich (CH); FRIEDERICH, Markus, 8952 Schlieren (CH)
(74) Vertreter: Sika Patent Attorneys
(86) Internationale Anmeldenummer: PCT/EP2013/072163
(87) Internationale Veröffentlichungsnummer: WO 2014/067832

(56) Entgegenhaltungen:
- WO-A1-2005/035603
- WO-A2-2008/015653
- WO-A2-2008/049549

## Beschreibung

Die Erfindung betrifft die Verwendung mindestens eines Kammpolymers, das Seitenketten umfasst, die mindestens eine kationische Gruppe aufweisen, und das keine Seitenketten mit Polyethergruppen umfasst, als Dispergiermittel für hydraulisch abbindbare Zusammensetzungen. Die Erfindung betrifft auch hydraulisch abbindbare Zementzusammensetzungen, Formkörper, Kammpolymere und Verfahren zur Herstellung von Kammpolymeren.

### Stand der Technik

In der Bautechnologie werden bei der Verarbeitung von hydraulisch abbindbaren Zusammensetzungen, wie Zementen und Gips, Dispergiermittel zugegeben, die insbesondere als Verflüssiger wirken. Durch den Zusatz solcher Verflüssiger kann der Wasseranteil herabgesetzt werden, wodurch die Verarbeitbarkeit der pastösen Zusammensetzungen verbessert und die Stabilität der ausgehärteten Produkte erhöht wird. Eine wichtige Gruppe solcher Dispergiermittel sind Kammpolymere aus Polycarbonsäuren mit Polyalkylenglykol-Seitenketten (Polycaboxylatether, PCE). Sie werden als Kammpolymere bezeichnet, weil sie ein einziges Basispolymer ("Backbone") aufweisen, an das eine Vielzahl von Seitenketten kovalent gebunden ist, so dass die Molekülstruktur insgesamt einem Kamm ähnelt. Es gibt eine Vielzahl solcher Kammpolymere, die neben Estergruppen und freien Carboxygruppen auch Amidgruppen aufweisen können.

Gips ist ein wichtiger Baustoff, der für eine Vielzahl von Anwendungen eingesetzt wird. Aushärtbare Gipszusammensetzungen werden beispielsweise zur Herstellung von Gipsplatten, als Spachtelmassen, Wandputze oder zur Herstellung von Estrichen eingesetzt. Bei der Verarbeitung von Gips besteht ein Bedürfnis, den Wassergehalt zu verringern. Dadurch wird der abgebundene Gips weniger porös und somit stabiler. Bei geringerem Wassergehalt ist zudem ein kürzerer Trockenvorgang ausreichend, wodurch die Verarbeitung beschleunigt wird und Energie eingespart werden kann.

Hydraulisch abbindbare Bindemittel aus natürlichen Lagerstätten, wie Gips, weisen häufig einen Gehalt an Ton auf. Übliche Kammpolymere sind jedoch als Dispergiermittel nicht oder nur eingeschränkt wirksam, wenn eine hydraulisch abbindbare Zusammensetzung Ton enthält. Kammpolymere interagieren in tonhaltigen Gipszusammensetzungen in unerwünschter Weise mit Ton-Partikeln und können daher nicht den gewünschten Effekt erzielen.

Zur Lösung des Problems wird im Stand der Technik vorgeschlagen, Zusatzmittel hinzuzufügen, welche die negativen Wirkungen von Ton aufheben, oder die speziell in tonhaltigen Zusammensetzungen eine dispergierende und verflüssigende Wirkung erzielen.

Das Patent US 7,261,772 B1 beschreibt eine Gipszusammensetzung, die neben Wasser, Gips und Ton zusätzlich Polyoxyalkylene, eine Aminverbindung und ein Kammpolymer enthält. Der Einsatz flüchtiger Amine ist jedoch nachteilig, da diese zu unangenehmen Gerüchen führen und bei der Verarbeitung und Freisetzung aus ausgehärteten Produkten gesundheitsschädlich sind. Bei vielen Anwendungen, insbesondere Gipsplatten, sind diese Nachteile für Anwender nicht akzeptabel.

Die WO 98/58887 schlägt vor, tonhaltigen Zementzusammensetzungen zusätzliche Additive, nämlich Polyether auf der Basis von Ethylenoxid und Propylenoxid, und niedermolekulare kationische Verbindungen zuzusetzen. Nachteilig ist die vergleichsweise geringe Wirksamkeit der Zusätze und der hohe Anteil an niedermolekularen Substanzen, welche selbst nicht als Verflüssiger wirken, aber die Stabilität des ausgehärteten Produkts verringern.

Die US 2007/0287794 A1 offenbart, tonhaltigen Gipszusammensetzungen kationische Polymere zuzufügen. Die Polymere sind Kondensate aus primären und sekundären Aminen mit geeigneten Reaktionspartnern, wie Epichlorhydrin. Die Reaktionsprodukte sind dabei lineare Polymere, welche kationische Ladungen auf der Polymerhauptkette tragen. Nachteilig dabei ist, dass bei der Herstellung der Kondensate Verbindungen zum Einsatz kommen, die chemisch nicht gut handhabbar und teilweise gesundheitsschädlich sind, wie Amine, Epoxide und Cyanidverbindungen. Außerdem zeigen die Ergebnisse (Tabelle 3 des Dokuments), dass die Polymere zwar die negative Wirkung von Ton in Gipszusammensetzungen neutralisieren können, jedoch nicht eine darüber hinausgehende verflüssigende Wirkung erzielen.

Die EP 2 463 317 A1 schlägt vor, tonhaltigen Gipszusammensetzungen übliche verflüssigende Polycarboxylatether, also Kammpolymere mit Polyether-Seitenketten, zuzusetzen, welche zusätzlich Seitenketten mit kationischen Gruppen aufweisen. Diese kationischen Kammpolymere verbinden somit die Eigenschaften üblicher Kammpolymere mit kationischen Ladungen, die eine vorteilhafte Wechselwirkung mit den Tonpartikeln bewirken sollen. Problematisch ist allerdings, dass die Kammpolymere relativ komplex sind. Dadurch wird die Herstellung aus kationischen, anionischen und langkettigen Polyetherseitenketten erschwert. Auch ist es problematisch, mit einem solchen komplexen Verflüssiger, der verschiedene Wirkungen in einem Molekül verbindet, einen gewünschten Verflüssiger-Effekt für eine Zusammensetzung mit konkretem Tongehalt einzustellen.

Die US 2012/0231991 A1 offenbart Kammpolymere als Zusätze für Reinigungsmittel auf der Basis amphoterer Polycarboxylate. Die Kammpolymere enthalten an den Seitenketten kationische Gruppen, die mit der Hauptkette über Polyethergruppen verbunden sind.

Insgesamt wäre es wünschenswert, weitere Dispergiermittel bereitzustellen, die insbesondere in Ton-haltigen Zusammensetzungen effizient, variabel und auf einfache Weise einsetzbar sind.

Die WO 2005/035603 A1 offenbart sulfogruppenhaltige Co- und Terpolymere, die kationische Seitenketten und sulfogruppenhaltige Seitenketten aufweisen, während die Hauptkette keine Säuregruppen aufweist. Zusätzlich ist mindestens ein weiterer Polymerbaustein b) enthalten, der eine endständige Amingruppe aufweist. Die Verarbeitung von kationischen, anionischen und aminischen Monomerbausteinen zu einem Polymer ist relativ aufwändig und es ist nicht zu erwarten, dass ohne weiteres eine hohe Ausbeute zu erzielen ist. Das einzige detaillierte Ausführungsbeispiel A1 belegt nicht, wie diese drei Komponenten zu einem einzigen Polymer zu verarbeiten sind.

Die WO 2008/049549 A2 offenbart hydrophob modifizierte vernetzte Polymere aus mindestens drei verschiedenen Struktureinheiten, die in hydraulischen Bindemitteln als Verflüssiger dienen. Die Polymere weisen Polyetherseitenketten auf. Die Polymere werden bei der Herstellung vernetzt, beispielsweise mit Tristyrylphenol-PEG-methacrylat, wodurch dreidimensionale Polymerblöcke erhalten werden. Die Herstellung aus mindestens drei Komponenten ist relativ aufwändig, wobei die Polymere mittels Gelpolymerisation hergestellt werden und polymerisierte Gelwürfel erhalten werden, die anschließend zerkleinert und getrocknet werden. Die Produkte sind keine Kammpolymere und weisen eine dazu unterschiedliche Struktur und Eigenschaften auf.

Die WO 2008/015653 A2 offenbart ebenfalls vernetzte Polymere, die für kosmetische Anwendungen geeignet sein sollen. Die Produkte sind keine Kammpolymere und weisen eine dazu unterschiedliche Struktur und Eigenschaften auf.

### Aufgabe der Erfindung

Der Erfindung liegt die Aufgabe zugrunde, die oben beschriebenen Nachteile zu überwinden. Der Erfindung liegt daher das Problem zugrunde, ein einfaches, variables und effizientes Verfahren zur Dispergierung und Verflüssigung von hydraulisch abbindbaren Zusammensetzungen und insbesondere Gipszusammensetzungen zur Verfügung zu stellen, insbesondere wenn diese Ton-haltig sind. Die dafür verwendeten Dispergiermittel sollen einfach und kostengünstig verfügbar sein und eine effiziente Verflüssigung bewirken. Insbesondere sollen Dispergiermittel bereitgestellt werden, die es ermöglichen, übliche Polycarboxylatether überhaupt nicht oder nur in geringen Dosierungen einzusetzen.

Bevorzugt sollen auch die Eigenschaften und vor allem die Stabilität der ausgehärteten Produkte verbessert werden. Insbesondere soll durch die Verringerung des Wassergehalts eine Verbesserung der Festigkeit erreicht werden.

### Offenbarung der Erfindung

Überraschenderweise wird die der Erfindung zugrunde liegende Aufgabe gelöst durch Verwendungen, Zusammensetzungen, Verfahren und Kammpolymere gemäß den Patentansprüchen. Weitere vorteilhafte Ausführungsformen werden in der Beschreibung offenbart.

Gegenstand der Erfindung ist die Verwendung mindestens eines Kammpolymers, das Seitenketten umfasst, die mindestens eine kationische Gruppe aufweisen, und das keine Seitenketten mit Polyethergruppen umfasst, und das eine Hauptkette aufweist, die Carboxygruppen aufweist, als Dispergiermittel für hydraulisch abbindbare Zusammensetzungen.

Die erfindungsgemäß verwendbaren Kammpolymere ohne Polyetherseitenketten werden nachfolgend auch kurz als "kationische Kammpolymere" bezeichnet. Das kationische Kammpolymer weist kationische Gruppen auf und kann zusätzliche anionische Gruppen aufweisen. Das Polymer ist daher ein kationisches Polymer oder ein zwitterionisches Polymer. Erfindungsgemäß steht der Begriff "Kammpolymer" für das Kammpolymer oder ein Salz davon. So kann ein kationisches Kammpolymer in Form von Salzen mit geeigneten Anionen eingesetzt werden, beispielsweise als Halogenid, insbesondere als Chlorid. Insofern das Kammpolymer ein Zwitterion ist, kann es als Salz mit geeigneten anionischen oder kationischen Gruppen eingesetzt werden. Das Kammpolymer kann auch als inneres Salz eingesetzt werden, bei dem sich die eigenen kationischen und anionischen Ladungen neutralisieren. Sofern Säuregruppen, wie Carboxygruppen, enthalten sind, können diese teilweise oder vollständig neutralisiert sein.

Erfindungsgemäß weist das kationische Kammpolymer an den Seitenketten mindestens eine kationische Gruppe auf, bevorzugt eine einzige kationische Gruppe pro Seitenkette. Dabei können sämtliche oder nur ein Teil der Seitenketten in einem Polymer kationische Gruppen aufweisen. Die kationische Gruppe ist mit dem Kammpolymer kovalent verbunden. Sie kann eine übliche kationische Gruppe sein, die an organische Polymere angehängt werden kann, wie eine Ammonium-, Sulfonium- oder Phosphoniumgruppe.

In einer bevorzugten Ausführungsform der Erfindung ist die kationische Gruppe eine Ammoniumgruppe. Besonders bevorzugt ist eine quartäre Ammoniumgruppe. Dabei ist ein positiv geladenes Stickstoffatom mit vier organischen Resten substituiert. Bevorzugt weist die kationische Gruppe die Formel -N⁺R⁸R⁹R¹⁰, wobei R⁸, R⁹ und R¹⁰ unabhängig voneinander H, ein aliphatischer Kohlenwasserstoffrest mit 1 bis 20 C-Atomen, ein cycloaliphatischer Kohlenwasserstoffrest mit 5 bis 8 C-Atomen und/oder ein Arylrest mit 6 bis 14 C-Atomen ist. Bevorzugt ist R⁸, R⁹ und R¹⁰ nicht H, besonders bevorzugt ausgewählt aus Methyl und Ethyl.

In einer bevorzugten Ausführungsform der Erfindung ist die kationische Gruppe Bestandteil einer monomeren Struktureinheit, die ausgewählt ist aus [2-(Acryloyloxy)-ethyl]-trimethyl-ammoniumchlorid, [2-(Acryloylamino)-ethyl]-trimethylammoniumchlorid, [2-(Acryloyloxy)-ethyl]-trimethyl-ammoniummethosulfat, [2-(Methacryloyloxy)-ethyl]-trimethylammoniumchlorid bzw. -methosulfat, [3-(Acryloylamino)-propyl]-trimethyammoniumchlorid, [3-(Methacryloylamino)-propyl]-trimethylammoniumchlorid und Diallyldimethylammoniumchlorid (DADMAC).

Als besonders vorteilhaft hat sich erfindungsgemäß die Verwendung von [2-(Methacryloyloxy)-ethyl]-trimethylammonium-Salzen, insbesondere Chlorid, erwiesen. Die Verwendung ist kommerziell erhältlich von Evonik Industries, DE (unter der Markenbezeichnung "Visiomer TMAEMC") oder von Sigma-Aldrich, DE.

Die kationische Gruppe ist Bestandteil einer Seitenkette. Dies bedeutet, dass sie nicht Bestandteil der Hauptkette des Kammpolymers ist. Sie verbindet daher nicht Untereinheiten der Hauptkette miteinander. Sie unterscheidet sich dadurch beispielsweise von Kondensaten aus Dimethylamin und Epichlorhydrin aus US 2007/0287794 A1.

In einer bevorzugten Ausführungsform weist das Kammpolymer keine Seitenketten auf, die Säuregruppen aufweisen. Insbesondere weist das Kammpolymer keine Seitenketten auf, die Sulfogruppen aufweisen. Insbesondere weisen die Seitenketten keine endständigen Säuregruppen auf. Das erfindungsgemäße Kammpolymer unterscheidet sich somit strukturell von den Polymeren aus der WO 2005/035603 A1, die Seitenketten mit endständigen Sulfogruppen aufweisen, während die Hauptkette keine Säuregruppen aufweist. Die erfindungsgemäßen Kammpolymere sind weniger komplex und weisen andere Eigenschaften auf, da sie über Carboxygruppen der Hauptkette an hydraulische Bindemittelpartikel binden können, während sich die kationischen Seitenketten in die wässrige Umgebung ausrichten.

In einer bevorzugten Ausführungsform der Erfindung umfasst das Kammpolymer mindestens eine Säureeinheit A der Formel (I), die weiter unten dargestellt ist. Die Säureeinheit A wird durch Polymerisation in das Kammpolymer eingearbeitet. Die Säuregruppe wird dadurch Bestandteil der Hauptkette. Die Säureeinheit A wird üblicherweise in das Polymer eingebracht, indem die Polymerisation in Gegenwart eines entsprechenden Säuremonomers oder eines Salzes oder Anhydrids davon durchgeführt wird. Als Säureeinheit A sind dabei insbesondere α-ungesättigte Mono- oder Dicarbonsäuren geeignet, insbesondere Acrylsäure, Methacrylsäure, Maleinsäureanhydrid, Maleinsäure, Itaconsäure, Crotonsäure oder Fumarsäure.

Das Kammpolymer ist ein zwitterionisches Kammpolymer, das Carboxygruppen aufweist. Die Carboxygruppen sind direkt an die Hauptkette gebunden. Eine solche Hauptkette wird erhalten, wenn bei der Herstellung durch Polymerisation als Monomere α-ungesättigte Carbonsäureuntereinheiten, wie Acrylsäure, Methacrylsäure oder substituierte Derivate davon eingesetzt werden, gegebenenfalls in Verbindung mit weiteren geeigneten Monomeren. Solche Monomere sind übliche Struktureinheiten von Polycarboxylatethern. Die Carboxygruppen werden allgemein wegen der unmittelbaren Nähe zur Hauptkette als Bestandteile dieser angesehen.

In einer bevorzugten Ausführungsform der Erfindung ist die Hauptkette eine Polyacrylsäure, Polymethacrylsäure oder ein Copolymer aus Acrylsäure und Methacrylsäure, wobei gegebenenfalls weitere Untereinheiten enthalten sein können, oder wobei die Carboxygruppen zum Teil modifiziert sein können, beispielsweise durch Veresterung. Die Polycarbonsäure oder das Salz davon bildet die Hauptkette des Kammpolymers. Die Carboxygruppen und die Polycarbonsäure können als freie Säure oder als Salz vorliegen, wobei auch nur ein Teil der Säuregruppen als Salz vorliegen kann. Die Polycarbonsäure ist dann vollständig oder teilweise neutralisiert. Der Begriff "Salz" umfasst erfindungsgemäß neben den klassischen Salzen, die durch Neutralisation mit einer Base erhalten werden, auch komplexe Verbindungen mit Metallionen und den Carboxygruppen als Liganden.

Bei der Herstellung solcher Polycarbonsäuren erfolgt die Einstellung der Kettenlänge regelmäßig mit einem Regler, beispielsweise Phosphit oder Sulfit. Daher können die Polycarbonsäuren Gruppen aufweisen, die keine Carbonsäureeinheiten sind, beispielsweise Phosphor- oder Schwefel-haltige Gruppen, wie Phospit- oder Sulfit-haltige Gruppen. Solche Gruppen sind häufig endständig an die Hauptkette angehängt und schließen diese ab.

In einer bevorzugten Ausführungsform der Erfindung umfasst das Kammpolymer:
a) mindestens eine Säureeinheit A der Formel (I): 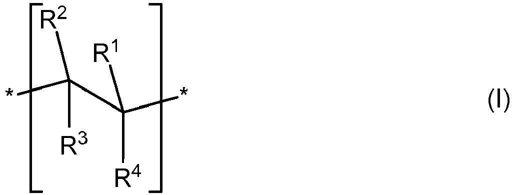
   wobei jedes R¹, R² und R³ unabhängig von den anderen für H, -COOM,
      -CH₂COOM oder eine Alkylgruppe mit 1 bis 5 Kohlenstoffatomen stehen,
   jedes R⁴ unabhängig von den anderen für -COOM, -CH₂COOM,
      -SO₂-OM, -O-PO(OM)₂ und/oder -PO(OM)₂ steht;
   oder wobei R³ mit R⁴ einen Ring bildet zu -CO-O-CO-;
   wobei M für H, ein Alkalimetall, ein Erdalkalimetall, Ammonium, ein
      Ammoniumkation, eine organische Ammoniumverbindung oder Mischungen davon steht;
   mit der Massgabe, dass in der Summe ein einziger oder zwei der Reste R¹, R², R³ und R⁴ Säuregruppen sind,
      wobei die Säureeinheit A bevorzugt eine Acrylsäureeinheit oder ein Salz davon und/oder eine Methacrylsäureeinheit oder ein Salz davon ist; und
b) mindestens eine kationische Struktureinheit K der Formel (II) 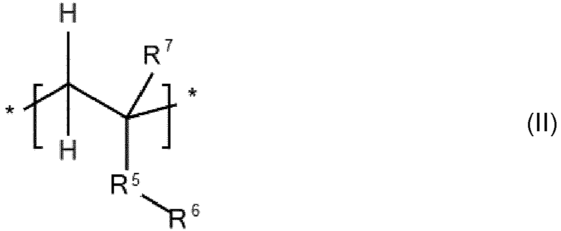 wobei
   - R⁵: unabhängig voneinander für -CO-O-R'-, -NH-R'-, -CO-NH-R'-, -O-, R',-O-R'- oder -R'-O-R'- steht, wobei R' eine C₁ bis C₂₀ Alkylidengruppe ist, die verzweigt oder unverzweigt sein kann, insbesondere eine Methylen-, Ethylen- oder Propylengruppe;
   - R⁶: unabhängig voneinander für eine kationische Gruppe steht, insbesondere eine der Formel -N⁺R⁸R⁹R¹⁰, wobei R⁸, R⁹ und R¹⁰ unabhängig voneinander H, ein aliphatischer Kohlenwasserstoffrest mit 1 bis 20 C-Atomen, ein cycloaliphatischer Kohlenwasserstoffrest mit 5 bis 8 C-Atomen und/oder ein Arylrest mit 6 bis 14 C-Atomen ist; und
   - R⁷: unabhängig voneinander für H oder CH₃ steht.

Die Säureeinheit **A** wird üblicherweise in das Polymer eingebracht, indem die Polymerisation in Gegenwart eines entsprechenden Säuremonomers oder eines Salzes oder Anhydrids davon durchgeführt wird. Als Säure-Monomere sind dabei insbesondere α-ungesättigte Mono- oder Dicarbonsäuren geeignet, insbesondere Acrylsäure, Methacrylsäure, Maleinsäureanhydrid, Maleinsäure, Itaconsäure, Crotonsäure oder Fumarsäure.

Das kationische Kammpolymer kann mindestens eine weitere Struktureinheit **C** aufweisen, die von den Struktureinheiten **A,** und **K** verschieden ist. Solche Struktureinheiten **C** können beliebig ausgewählt werden, sofern sie keine Polyethergruppen aufweisen. Sie sollten auch die dispergierende Wirkung des Kammpolymers nicht aufheben oder stark beeinträchtigen. Bevorzugt ist die Struktureinheit **C** eine niedermolekulare, also eine nicht polymere Struktureinheit. Diese kann ausgewählt sein aus einer Ether-, Ester, Amid- oder Imideinheit, einer Säureeinheit, ausgewählt aus Carbonsäure, Sulfonsäure, Phosphonsäure, Phosphorsäureester, Carbonylamidomethylpropansulfonsäure und deren Salzen, oder einer Hydroxyethyloxycarbonyl-, Acetoxy-, Phenyl- oder N-Pyrrolidonylgruppe. Die jeweiligen Gruppen können dabei mit H oder mit organischen Resten substituiert sein, beispielsweise unabhängig voneinander mit Resten ausgewählt aus H, aliphatischen Kohlenwasserstoffresten mit 1 bis 20 C-Atomen (verzweigt oder unverzweigt), cycloaliphatischen Kohlenwasserstoffresten mit 5 bis 8 C-Atomen und/oder Arylresten mit 6 bis 14 C-Atomen. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird. Beispielsweise kann die Struktureinheit **C** eine Amideinheit sein, welche durch Umsetzung einer Mono- oder Dicarbonsäure mit einem Alkylamin, insbesondere einem C₆-C₂₀ Alkylamin, hergestellt wird. Geeignete Struktureinheiten zur Einarbeitung in Kammpolymere sind im Stand der Technik bekannt. Sie werden beispielsweise in der EP 2 463 317 A1 beschrieben, auf die hier ausdrücklich Bezug genommen wird, insbesondere auf die Absätze [0022], [0023], [0026] und [0027] (jeweils ausgenommen Ausführungsformen mit Polyethergruppen). Alternativ kann das Kammpolymer aus den Struktureinheiten **A** und **K** bestehen.

Das Kammpolymer kann eine Kombination von verschiedenen Struktureinheiten der jeweiligen Struktureinheiten von **A**, **K** und gegebenenfalls **C** aufweisen. Beispielsweise können Säureeinheiten **A** gemischt im Kammpolymer vorkommen, welche gar nicht oder ganz neutralisiert sind. Die Abfolge der einzelnen Struktureinheiten **A**, **K**, und **C** kann alternierend, statistisch oder blockweise sein.

In einer bevorzugten Ausführungsform der Erfindung umfasst das Kammpolymer mindestens 5 Mol-%, mindestens 15 Mol-% oder mindestens 25 Mol-% Struktureinheiten mit Seitenketten, die eine kationische Gruppe aufweisen. In einer bevorzugten Ausführungsform der Erfindung umfasst das Kammpolymer 5 bis 100 Mol-%, bevorzugt 15 bis 100 Mol-%, noch mehr bevorzugt 25 bis 100 Mol-% Struktureinheiten mit Seitenketten, die mindestens eine kationische Gruppe aufweisen, und 0 bis 95 Mol-%, bevorzugt 0 bis 85 Mol-%, noch mehr bevorzugt 0 bis 75 Mol-% Struktureinheiten mit Säuregruppen, insbesondere Carboxygruppen, jeweils bezogen auf die Gesamtzahl aller monomerer Struktureinheiten der Hauptkette des Kammpolymers.

In einer bevorzugten Ausführungsform der Erfindung beträgt die Summe der Struktureinheiten mit Seitenketten, die mindestens eine kationische Gruppe aufweisen, und der Struktureinheiten mit Säuregruppen, insbesondere Carboxygruppen, mindestens 50 Mol-%, bevorzugt mindestens 75 Mol-%, insbesondere mindestens 85 Mol.-%, mindestens 90 Mol.-% oder mindestens 95 Mol.-%, und in einer besonderen Ausführungsform 100 Mol.-%, bezogen jeweils auf die Gesamtzahl aller monomerer Struktureinheiten der Hauptkette des Kammpolymers.

In einer bevorzugten Ausführungsform der Erfindung umfasst das Kammpolymer, bzw. besteht das Kammpolymer aus
a) 0 bis 95 Mol-%, vorzugsweise 10 bis 80 Mol-%, besonders bevorzugt 25-75 Mol-% der Säureeinheit **A**, insbesondere Acrylsäureeinheiten und/oder Methacrylsäureeinheiten (zusammengenommen),
b) 5 bis 100 Mol-%, vorzugsweise 10 bis 90 Mol-%, besonders bevorzugt 25-75 Mol-% der Struktureinheit **K**, und
c) 0 bis 50 Mol-%, vorzugsweise 0 bis 20 Mol-%, insbesondere 0 bis 5 Mol-% der Struktureinheit **C**,
jeweils bezogen auf die Gesamtzahl aller monomeren Struktureinheiten in der Hauptkette des Kammpolymers.

Das Kammpolymer weist vorzugsweise ein mittleres Molekulargewicht Mₙ im Bereich von 1.000 bis 150.000 g/mol, vorzugsweise 2.000 bis 100.000 g/mol, besonders bevorzugt 5.000 bis 80.000 g/mol auf.

Das erfindungsgemäße Kammpolymer weist keine Seitenketten mit Polyethergruppen auf. In einer bevorzugten Ausführungsform weist das Kammpolymer überhaupt keine Polyethergruppen auf. Polyethergruppen werden durch Polymerisation von Alkoholen mit zwei oder mehr Hydroxygruppen, wie Ethylenglykol oder Propylenglykol, erhalten. Polycarboxylatether, die als Dispergiermittel im Stand der Technik eingesetzt werden, weisen regelmäßig Polyethylen- und/oder Polypropylen-Untereinheiten auf. Im Stand der Technik wird angenommen, dass solche Polyether-Seitenketten die Interaktion der Kammpolymere mit der wässrigen Umgebung verbessern. Sie dienen zur Hydrophilierung der Kammpolymere und sollen zur verflüssigenden Wirkung beitragen. Es war daher erfindungsgemäß überraschend, dass Kammpolymere ohne Polyethergruppen eine signifikante verflüssigende Wirkung in hydraulisch abbindbaren Zusammensetzungen zeigen, selbst dann, wenn diese Ton enthalten. Erfindungsgemäß sind daher insbesondere keine Polyethergruppen der Formel -(R³O)ₙ- enthalten, wobei R³ unabhängig voneinander für eine Alkylidengruppe, insbesondere eine C₁ - C₆ Alkylidengruppe, insbesondere für eine Ethylen- oder Propylengruppe steht. n ist dabei im Mittel bevorzugt mindestens 3, mindestens 5 oder mindestens 10.

In einer bevorzugten Ausführungsform der Erfindung umfasst das Kammpolymer nicht:
c) eine Struktureinheit B der Formel (I); 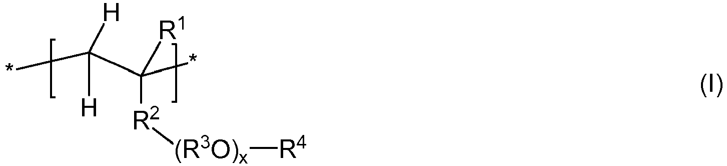 wobei
   - R¹: unabhängig voneinander für H oder CH₃ steht;
   - R²: unabhängig voneinander für ein Estergruppe -CO-O-, eine Amidgruppe -CO-NH- oder ein C₁ - C₁₂ Alkylrest steht,
   - R³: unabhängig voneinander für eine C₁ - C₆ Alkylidengruppe, insbesondere für eine Ethylen- oder Propylengruppe steht,
   - R⁴: unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
   - x: mindestens 3 ist.

In einer weiteren bevorzugten Ausführungsform der Erfindung weisen die eingesetzten Kammpolymere allgemein keine längeren, hydrophilen Seitenketten auf. In einer bevorzugten Ausführungsform der Erfindung weist das Kammpolymer keine Seitenketten mit einem Molekulargewicht von mehr als 2000 g/Mol, mehr als 1500 g/Mol oder mehr als 1000 g/Mol auf. Erfindungsgemäß wurde gefunden, dass auch Kammpolymere, die nicht solche längeren Seitenketten aufweisen, als Dispergiermittel und Verflüssiger geeignet sind.

In einer weiteren bevorzugten Ausführungsform der Erfindung ist das Kammpolymer ein Homopolymer aus einem Monomer, das eine Seitenkette mit mindestens einer positiven Ladung aufweist. Das Monomer zur Herstellung des Homopolymers und die Struktureinheit mit kationischer Ladung sind dabei bevorzugt wie oben beschrieben ausgewählt. Die kationische Struktureinheit im Homopolymer ist insbesondere eine Struktureinheit **K** wie oben beschrieben. Das Kammpolymer weist bei dieser Ausführungsform insgesamt, oder zumindest an der Hauptkette, keine Carboxygruppen und keine negativen Ladungen auf. Überraschenderweise wurde gefunden, dass ein solches Polymer mit sehr hoher kationischer Ladungsdichte eine signifikante Wirkung als Dispergiermittel und Verflüssiger in hydraulisch abbindbaren Zusammensetzungen erreicht, selbst wenn diese tonhaltig sind. In tonhaltigen Zusammensetzungen kann die verflüssigende Wirkung dabei sogar die von üblichen Polycarboxylatethern übertreffen.

Unter dem Begriff "hydraulisch abbindbare Zusammensetzung" werden solche Zusammensetzungen verstanden, die hydraulisch abbindbare Bindemittel enthalten. Solche Bindemittel härten in Gegenwart von Wasser aus. Geeignete Zusammensetzungen und Bindemittel sind dem Fachmann im Bereich der Bauchemie bekannt. In einer bevorzugten Ausführungsform der Erfindung ist oder umfasst das hydraulisch abbindbare Bindemittel in der Zusammensetzung Gips, Kalk oder Zement. Übliche Zemente sind beispielsweise Portlandzemente oder Tonerdeschmelzzemente und deren jeweilige Mischungen mit üblichen Zusätzen.

In einer bevorzugten Ausführungsform der Erfindung enthält die hydraulisch abbindbare Zusammensetzung Gips. Gips ist ein Synonym für Calciumsulfat. Dieses kann je nach Herstellungsverfahren in verschiedenen Modifikationen vorliegen, die sich durch den Gehalt an Kristallwasser und durch die kristalline Form unterscheiden. Technisch wird das Vermögen von Gips genutzt, dass durch Erhitzen (Brennen) teilweise oder vollständig entfernte Kristallwasser bei Zugabe von Wasser wieder aufzunehmen und dabei abzubinden. Da für die Verarbeitbarkeit mehr Wasser benötigt wird, als für das Abbinden notwendig ist, muss das Überschusswasser (bis zu 65%) wieder entfernt werden. Eine solche feuchte Gipszusammensetzung kann geformt werden. Der Gips kann Calciumsulfat in verschiedenen Kristallformen, beispielsweise als ß-Halbhydrat, alpha-Halbhydrat, Anhydrit, oder als Gemisch davon enthalten. Der Gips kann Naturgips oder ein Produkt aus Rauchentschwefelungsanlagen (REA-Gips) sein.

In einer bevorzugten Ausführungsform der Erfindung enthält die hydraulisch abbindbare Zusammensetzung Ton. Tone sind Verwitterungsprodukte von Feldspaten. Sie bestehen nach dem Herauslösen der Alkali- und Erdalkalianteile aus dem verbliebenen Aluminiumsilikat. Übliche Formen von Ton sind Kaolinit Montmorillonit oder Bentonit. Der Tongehalt des hydraulisch abbindbaren Bindemittels, wie Gips oder Zement, kann beispielsweise zwischen 0,1 und 15 Gew.-%, insbesondere zwischen 0,2 und 10 Gew.-% oder zwischen 0,5 und 5 Gew.-% liegen. Besonders bevorzugt ist das Bindemittel ein tonhaltiger Gips. Naturgips kann, je nach Lagerstätte, einen Ton-Anteil enthalten.

Die erfindungsgemäße Gipszusammensetzung enthält bevorzugt mindestens 15 Gew.-%, bevorzugt mindestens 50 Gew.-%, noch mehr bevorzugt mindestens 70 Gew.-% oder mindestens 95 Gew.-% tonhaltigen Gips, bezogen auf das Gesamtgewicht. Die erfindungsgemäße tonhaltige Gipszusammensetzung kann wasserfrei sein oder weniger als 0,5, 1 oder 5 Gew.-% Wasser enthalten. Sie kann jedoch auch bereits bis zu 10, 20, 50 oder 80 Gew.-% Wasser enthalten. Der Anteil des kationischen Kammpolymers an einer erfindungsgemäßen tonhaltigen Gipszusammensetzung liegt in einer bevorzugten Ausführungsform zwischen 0,01 und 2 Gew.-%. insbesondere zwischen 0,05 und 1 Gew.-%.

Gegebenenfalls sind in der hydraulisch abbindbaren Zusammensetzung Zusatzstoffe enthalten. Geeignet sind übliche Zusatzstoffe, wie Flugaschen, Silica Fume, Schlacke, Hüttensanden und Kalksteinfüller, enthalten. Weiterhin sind Zuschlagstoffe wie Sand, Kies, Steine, Quarzmehl, Kreiden, Beschleuniger, Korrosionsinhibitoren, Verzögerer, Schwindreduzierer, Entschäumer oder Porenbildner einsetzbar.

Das kationische Kammpolymer wird vorzugsweise in einer Menge von 0.01 bis 5 Gew.-%, insbesondere 0,05 bis 2 Gew.-% oder 0,1 bis 1 Gew.-%, bezogen auf das Gewicht des hydraulisch abbindbaren Bindemittels, eingesetzt. Das Kammpolymer kann getrennt oder als Kammpolymer-haltige Zusammensetzung in fester oder flüssiger Form zugegeben werden. Das Kammpolymer wird bevorzugt in Form einer flüssigen Zusammensetzung eingesetzt, insbesondere als wässrige Lösung.

Das kationische Kammpolymer wird als Dispergiermittel und dabei insbesondere als Verflüssiger, als Wasserreduzierer, zur Verbesserung der Verarbeitbarkeit und/oder zur Verbesserung der Fliessfähigkeit der damit hergestellten hydraulisch abbindbaren Zusammensetzungen eingesetzt, sowie zur Verbesserung der Stabilität der ausgehärteten Produkte. Insbesondere können erfindungsgemäß hydraulisch abbindbare Zusammensetzungen mit verlängerter Verarbeitbarkeit erhalten werden. Das bedeutet, dass die Zusammensetzung nach Zugabe von Wasser und dem Kammpolymer noch über längere Zeit verarbeitbar ist, im Vergleich zu Zusammensetzungen, die das Kammpolymer nicht enthalten.

Erfindungsgemäß wird die Fließfähigkeit einer hydraulisch abbindbaren Zusammensetzung erhöht. Bevorzugt wird durch den Zusatz des kationischen Kammpolymers das Ausbreitmaß um mindestens 5%, insbesondere mehr als 10%, noch mehr bevorzugt um mehr als 15% oder mehr als 25% erhöht, jeweils verglichen mit einer identischen Zusammensetzung ohne kationischem Polymer. Das Ausbreitmaß wird dabei beispielsweise mit einer fließfähigen Probe mit 0,2 Gew.% kationischem Kammpolymer (bezogen auf die Menge des hydraulisch abbindenden Bindemittels) ermittelt, insbesondere nach Mischen mit Wasser und 30 Sekunden intensivem Rühren in einem Minikonus von 50 mm, Füllhöhe 51 mm, nach 75 Sekunden. Das Ausbreitmaß kann dabei wie in den Ausführungsbeispielen beschrieben ermittelt werden. Es können auch Standardbedingungen gemäß DIN EN 132790-2 oder DIN EN 12350-5 - Prüfung von Frischbeton - Teil 5: Ausbreitmaß verwendet werden.

Das kationische Kammpolymer kann als Dispergiermittel oder als Bestandteil eines Dispergiermittels in Verbindung mit weiteren Komponenten eingesetzt werden. Weitere Bestandteile können andere Verflüssiger, beispielsweise Polycarboxylatether (PCE), Lignosulfonate, sulfonierte Naphthalin-Formaldehyd-Kondensate oder sulfonierte Melamin-Formaldehyd-Kondensate sein; oder Beschleuniger, Verzögerer, Schwindreduzierer, Entschäumer, Luftporenbildner oder Schaumbildner. Typischerweise beträgt der Anteil des Kammpolymers 5 bis 100 Gew.-%, insbesondere 20 bis 100 Gew.-%, bezogen auf das Gesamtgewicht des Dispergiermittels.

Das kationische Kammpolymer oder eine Kammpolymer-haltige Zusammensetzung kann auch in festem Aggregatszustand eingesetzt werden, beispielsweise als Flocken, Pulver, Schuppen, Pellets, Granulate oder Platten. Solche festen Zusätze lassen sich gut transportieren und lagern. Das Kammpolymer kann im festen Aggregatszustand ein Bestandteil einer so genannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das kationische Kammpolymer kann einer hydraulisch abbindbaren Zusammensetzung mit oder kurz vor oder kurz nach der Zugabe des Wassers zugefügt werden. Als besonders geeignet hat sich hierbei die Zugabe des Kammpolymers in Form einer wässrigen Lösung oder Dispersion, insbesondere als Anmachwasser oder als Teil des Anmachwassers, herausgestellt. Die Herstellung der wässrigen Lösung erfolgt insbesondere durch nachträgliches Vermengen mit Wasser. Das kationische Kammpolymer kann einer hydraulisch abbindbaren Zusammensetzung jedoch auch vor oder während ihrem Mahlvorgang, beispielsweise dem Mahlprozess von Zementklinker zu Zement, zugegeben werden.

In einer Ausführungsform der Erfindung wird als Dispergiermittel das Reaktionsprodukt der Synthese des kationischen Kammpolymers eingesetzt, das nicht weiter aufgereinigt wurde. Wegen der hohen Konzentration und Stabilität der Kammpolymere in diesen wässrigen Zusammensetzungen ist eine Aufreinigung nicht unbedingt erforderlich. Vor der Verwendung können jedoch weitere Komponenten zugefügt werden. In einer weiteren Ausführungsform kann das Kammpolymer vor der Verwendung als Dispergiermittel gereinigt werden, beispielsweise durch Abtrennung weiterer Komponenten, beispielsweise durch Filtration.

In einer bevorzugten Ausführungsform der Erfindung wird kein weiteres Dispergiermittel oder kein weiteres Kammpolymer eingesetzt. Es wurde gefunden, dass das kationische Kammpolymer ohne Polyether-Seitenketten bereits eine gute verflüssigende Wirkung erzielt.

In einer bevorzugten Ausführungsform der Erfindung enthält die hydraulisch abbindbare Zusammensetzung mindestens ein weiteres Dispergiermittel. Dabei wird bevorzugt ein weiteres Kammpolymer eingesetzt, das über Ester-, Amid-und/oder Ethergruppen an eine Hauptkette angebundene Seitenketten mit Polyethergruppen aufweist, wobei die Hauptketten Carboxygruppen aufweist. Solche Kammpolymere werden auch als Polycarboxylatether (PCE) bezeichnet. bevorzugt weist dieses bekannte Kammpolymer keine kationischen Gruppen auf. Erfindungsgemäß wurde gefunden, dass es besonders vorteilhaft ist, einen solchen üblichen Polycarboxylatether ohne kationische Gruppen zusammen mit einem erfindungsgemäßen Kammpolymer mit kationischen Seitenketten ohne Polyethergruppen-Seitenketten einzusetzen. Das Mengenverhältnis von Polycarboxylatethern zu erfindungsgemäßen kationischen Kammpolymeren kann beispielsweise zwischen 1:10 und 10:1 liegen, insbesondere zwischen 1:2 und 2:1. Ohne an eine Theorie gebunden zu sein, könnte dabei das kationische Kammpolymer die Tonpartikel neutralisieren und dadurch der Polycarboxylatether die bekannte verflüssigende Wirkung entfalten, ohne durch die Tonpartikel beeinträchtigt zu werden. Dabei ist vorteilhaft, dass herkömmlicher Polycarboxylatether eingespart werden kann, der relativ aufwändig zu synthetisieren und daher teuer ist.

Gegenstand der Erfindung ist auch eine hydraulisch abbindbare Zusammensetzung, enthaltend ein hydraulisch abbindbares Bindemittel und mindestens ein zwitterionisches Kammpolymer, das eine Hauptkette aufweist, die Carboxygruppen aufweist, und das Seitenketten aufweist, die eine kationische Gruppe aufweisen, wobei das Kammpolymer keine Seitenketten mit Polyethergruppen aufweist. Bevorzugt ist das hydraulisch abbindbare Bindemittel Gips, wobei die Zusammensetzung bevorzugt Ton enthält.

Gegenstand der Erfindung ist auch Formkörper, erhältlich durch Abbinden und Aushärten einer erfindungsgemäßen hydraulisch abbindbaren Zusammensetzung. Erfindungsgemäß wird mit dem Begriff "Formkörper" jeder dreidimensionale feste Körper bezeichnet, der eine Form erhalten hat, wie bewegliche Konstruktionselemente, Gebäudeteile, Böden oder Beschichtungen. Bevorzugt ist der Formkörper eine Gipsplatte.

Gegenstand der Erfindung ist auch zwitterionisches Kammpolymer, umfassend eine Hauptkette, die Carboxygruppen aufweist, und Seitenketten, die mindestens eine kationische Gruppe aufweisen, wobei das Kammpolymer keine Seitenketten mit Polyethergruppen aufweist. Das zwitterionische Kammpolymer entspricht dabei in bevorzugten Ausführungsformen den oben beschriebenen kationischen Kammpolymeren, die für die erfindungsgemäße Verwendung geeignet sind. Um Wiederholungen zu vermeiden, wird daher bezüglich der chemischen Struktur auf die obigen Ausführungen verwiesen.

Gegenstand der Erfindung ist auch ein Verfahren zur Herstellung der zwitterionischen erfindungsgemäßen Kammpolymere, umfassend die Schritte:
(A) Bereitstellen eines Reaktionsgemischs, dass mindestens ein Monomer mit einer ungesättigten Gruppe und einer Carboxygruppe, und mindestens ein Monomer mit einer ungesättigten Gruppe und einer kationischen Gruppe enthält, und
(B) Polymerisieren des Reaktionsgemischs unter Erhalt des zwitterionischen Kammpolymers.
Die Polymerisation erfolgt bevorzugt radikalisch. Bevorzugt weisen dabei alle Monomere eine Struktureinheit C=C-CO- auf.

Im Stand der Technik werden im Wesentlichen zwei bekannte Verfahren zur Herstellung von Kammpolymeren eingesetzt. In einem Verfahren werden solche Kammpolymere aus ungesättigten Carbonsäure-, Ester-, Ether-, Amid- und/oder Imid-funktionellen Monomeren durch radikalische Polymerisation hergestellt. Dieses erste Verfahren ist erfindungsgemäß bevorzugt. In einem alternativen Verfahren werden die Polymere durch so genannte "polymeranaloge Umsetzung" aus einer Polycarbonsäure, die Acrylsäureeinheiten und/oder Methacrylsäureeinheiten aufweist, mit Alkoholen und/oder Aminen hergestellt. Dabei werden die Seitenketten durch Veresterung und/oder Amidierung an die Polycarbonsäure angehängt, unter Erhalt des Kammpolymers.

Die erfindungsgemäßen Verwendungen, Verfahren und kationischen Kammpolymere ohne Polyetherseitenketten lösen die Aufgabe, die der Erfindung zugrunde liegt. Erfindungsgemäß werden neue und effiziente Dispergiermittel und Verflüssiger für hydraulisch abbindbare Zusammensetzungen bereitgestellt. Diese sind insbesondere für Gipszusammensetzungen, die Ton enthalten, geeignet. Die erfindungsgemäßen Kammpolymere mit kationischen Seitenketten ohne Polyethergruppen sind relativ einfach herstellbar und weisen eine starke verflüssigende Wirkung auf. In den Beispielen wird gezeigt, dass sie nicht lediglich den Ton in der hydraulisch abbindenden Zusammensetzung neutralisieren, sondern darüber hinaus einen verflüssigenden Effekt bewirken können. Mit den erfindungsgemäßen Kammpolymeren kann der Anwender auf einfache Weise die Eigenschaften einer hydraulisch abbindbaren Zusammensetzung und optimieren.

Die erfindungsgemäßen Kammpolymere sind vorteilhaft, weil für ihre Herstellung keine Polyether-Untereinheiten erforderlich sind. Im Stand der Technik ist es allgemein üblich, gattungsgemäße Kammpolymere mit Polyetherseitenketten auszustatten. Die Herstellung ohne Polyetherseitenketten vereinfacht das Herstellungsverfahren und reduziert die Kosten für die Herstellung. Dies ist bei gattungsgemäßen Kammpolymeren, die in großen Mengen im Baubereich eingesetzt werden, von hoher Bedeutung.

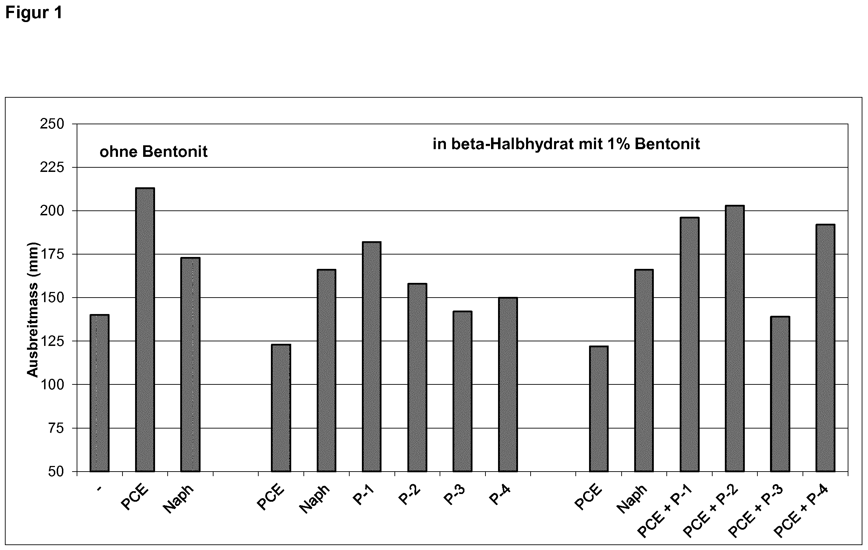

Figur 1 zeigt eine Übersicht der Ergebnisse der Ausführungsbeispiele 5 bis 19. Gezeigt ist jeweils das Ausbreitmaß in mm wie in Tabelle 2 angegeben.

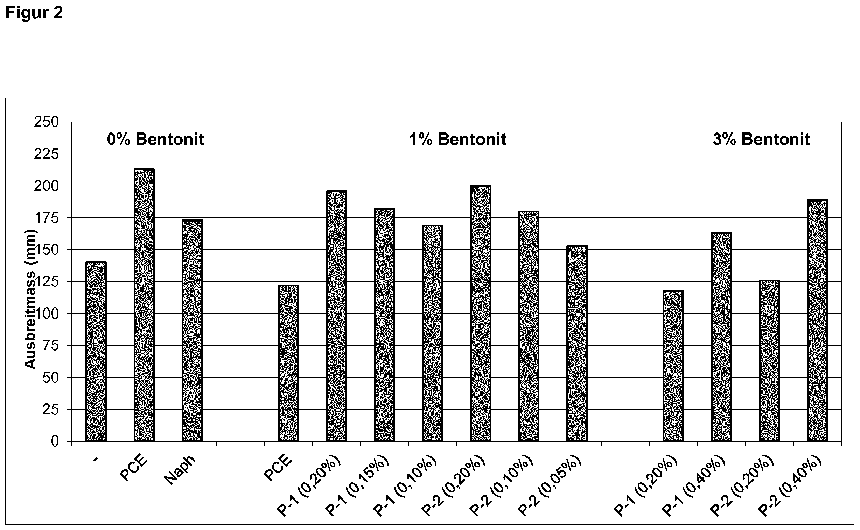

Figur 2 zeigt eine Übersicht der Ergebnisse der Ausführungsbeispiele 20 bis 33. Gezeigt wird jeweils das Ausbreitmaß in mm wie in Tabelle 3 angegeben.
Figur 3 zeigt eine Übersicht der Ergebnisse der Ausführungsbeispiele 34 bis 46. Gezeigt ist jeweils das Ausbreitmaß in mm wie in Tabelle 4 angegeben. Die Bezeichnungen "BASF 1" und BASF 2" bezeichnen die Kammpolymere V-1 und V-2 aus dem Stand der Technik.
Figur 4 zeigt eine Übersicht der Ergebnisse der Ausführungsbeispiele 47 bis 53. Gezeigt wird jeweils das Ausbreitmaß in mm wie in Tabelle 5 angegeben. Die Bezeichnungen "BASF 1" und BASF 2" bezeichnen die Kammpolymere V-1 und V-2 aus dem Stand der Technik.

### Ausführungsbeispiele

### Beispiele 1 bis 4: Herstellung der Polymere

Das erfindungsgemässe Polymer P-1 wurde hergestellt indem in einem Reaktionsgefäss mit Rührer 70 g Wasser, 27.5 g [2-(Methacryloyloxy)-ethyl]-trimethylammoniumchlorid (75%ige Lösung in Wasser; Markenbezeichnung "Visiomer TMAEMC", Evonik Industries, DE), 7.2 g Acrylsäure, 1.5 g einer 10%igen wässrigen Lösung von Fe(II)-SO_{4*}7 H₂O und 1.5 g Natriumhypophosphit vorgelegt wurden. Danach wurde bei einer Temperatur von 25 - 50°C über eine Zeit von 8 min unter Rühren 1.8 g einer 35%igen wässrigen Wasserstoffperoxid-und 1.6 g einer 5%igen wässrigen Lösung von Initiator (Natriumhydroxymethylsulfinat-Lösung, Markenbezeichnung "Rongalit", BASF, DE) zugetropft. Die Reaktionslösung wurde gekühlt, um einen Temperaturanstieg auf mehr als 50°C zu vermeiden und nach Reaktionsende für 10 min nachgerührt, um restliches Peroxid zu entfernen.

Die Polymere P-2 bis P-4 wurden in gleicher Weise wie Polymer P-1, aber mit veränderten Molanteilen der Monomere entsprechend der in Tabelle 1 zusammengefassten Informationen hergestellt.

**Tabelle 1:**

| **Bsp.** | **Polymer** | **Mol%** | **Vorlage (g)** | **Zulauf (g)** | **Zulaufzeit** |
|---|---|---|---|---|---|
| 1 | P-1 | m = 50 | 70 g H₂O, 1.5 g Fe(II), 1.5 g Regler | 1.8 g H₂O₂, 1.6 g Rongalit | 8 min |
| | | n = 50 | | | |
| 2 | P-2 | m = 66 | 110 g H₂O,2.0 g Fe(II), 2.0 g Regler | 3.2 g H₂O₂, 2.0 g Rongalit | 10 min |
| | | n = 34 | | | |
| 3 | P-3 | m = 34 | 70 g H₂O, 2.0g Fe(II), 2.0 g Regler | 3.2 g H₂O₂, 2.0 g Rongalit | 12 min |
| | | n = 66 | | | |
| 4 | P-4 | m = 100 | 70 g H₂O, 1.5 g Fe(II), 1.5 g Regler | 3.3 g H₂O₂, 1.8 g Rongalit | 10 min |
| | | n = 0 | | | |

| | | | | | |
|---|---|---|---|---|---|
| m = Molanteil kationisches Monomer; n = Molanteil Acrylsäure | | | | | |

### Beispiele 5 bis 33: Herstellung von abbindbaren Gipszusammensetzungen und Charakterisierung des Fliessverhaltens

Das Ausbreitmaß (ABM), der Versteifungsbeginn (VB) und das Versteifungsende (VE) von Gipskuchen wurden wie folgt bestimmt. Zunächst wurden 140 g Wasser mit dem Kammpolymer (Verflüssiger) und dem Additiv versetzt. Dabei wurde die Menge an Kammpolymer oder Verflüssiger vorher im Hinblick auf die Menge Calciumsulfat eingestellt. Bei den Vergleichsversuchen wurden entsprechend Zusätze und/oder Kammpolymer weggelassen. Dann wurden 200 g Calciumsulfat-β-Halbhydrat und 0.2 g Calciumsulfat-Dihydrat innerhalb von 15 Sekunden in das Wasser eingestreut und der Gipskuchen 15 Sekunden sumpfen gelassen. Anschliessend wurde 30 Sekunden von Hand intensiv gerührt. Der Minikonus mit einem Durchmesser von 50 mm und einer Höhe von 51 mm wurde gefüllt und nach 75 Sekunden das Ausbreitmass (ABM) in Millimeter bestimmt.

Der Durchmesser des sich bildenden Gipskuchens wurde gemessen, sobald kein Fliessen mehr beobachtet wurde. Der Durchmesser in mm wurde als Ausbreitmasse bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt. Um den Tongehalt genau und reproduzierbar einzustellen, wurde reines Calciumsulfat mit einer eingestellten Menge Ton versetzt. Es wurde ein Calciumsulfat-ß-Halbhydrat zusammen mit Calciumsulfat-Dihydrat als Gips eingesetzt und Bentonit (Sigma-Aldrich Chemie GmbH, CH) hinzugefügt.

Die Versuchsbedingungen und die Ergebnisse von zwei Versuchsreihen sind in den Tabellen 2 und 3 zusammengefasst. Nicht erfinderische Beispiele sind als "V" (Vergleich) kategorisiert. Zum Vergleich und zur Erprobung von Kombinationen wurden übliche Polycarboxylather ("PCE"; Markenbezeichnung Sika ViscoCrete G2; Firma Sika, CH) und Naphthalinsulfonat (Markenbezeichnung Flube 40, Firma PCC Rokita SA, PL) eingesetzt.

Die Beispiele 5 bis 9 und 20 bis 23 zeigen Vergleichsversuche ohne Zusatz der erfindungsgemäßen Kammpolymere. Dabei zeigen die Versuche 5 bis 7 und 20 bis 22 Ergebnisse für Gipszusammensetzungen ohne Tongehalt. Ein Vergleich der Versuche 6 und 8 zeigt, wie stark die Fließfähigkeit in Gegenwart von Ton (Beispiel 8) herabgesetzt ist. Die Beispiele 10 bis 13 zeigen, dass die Fließfähigkeit tonhaltiger Gipse alleine durch Zusatz der erfindungsgemäßen Kammpolymere bereits deutlich erhöht werden kann. Die Fließfähigkeit betrifft dabei zum Teil deutlich diejenige eines vergleichbaren Gipses ohne Tongehalt gemäß Beispiel 5. Dies zeigt, dass die erfindungsgemäßen Kammpolymere nicht nur den Ton neutralisieren, sondern darüber hinaus eine verflüssigende Wirkung aufweisen. Wenn zusätzlich ein Polycarboxylatether hinzugefügt wird, kann teilweise die Fließfähigkeit noch weiter verbessert werden und es werden zum Teil Werte erreicht, die im Bereich von Fließfähigkeiten vergleichbarer Zusammensetzungen ohne Ton mit Polycarboxylatethern liegen (Beispiele 6, 16, 17 und 19). Die Versuche 20 bis 33 zeigen zudem, wie die Fließfähigkeit durch Auswahl verschiedener erfindungsgemäßer Kammpolymere im Hinblick auf unterschiedliche Tongehalte eingestellt und optimiert werden kann. Je nach gewünschter Anwendung können auch der Versteifungsbeginn und das Versteifungsende variiert und optimiert werden.

### Beispiele 34 bis 53: Vergleichsversuche

Es wurden Vergleichsversuche durchgeführt, bei denen das Fließverhalten von Gipszusammensetzungen untersucht wurde, welche die erfindungsgemäßen Kammpolymere oder Kammpolymere gemäß dem Stand der Technik der EP 2 463 317 A1 enthalten. Die EP 2 463 317 A1 offenbart Kammpolymere, die Seitenketten mit einer kationische Gruppe und Seitenketten mit Polyethergruppen aufweisen. Für die Vergleichsversuche wurden kationische Kammpolymere V-1 und V-2 gemäß den Verfahren der Synthesebeispiele 2 und 3 der EP 2 463 317 A1 hergestellt. Anschließend wurde das Fließverhalten dieser Kammpolymere und der erfindungsgemäßen Kammpolymere P-1 bis P-4 aus den Ausführungsbeispielen 1 bis 4 untersucht. Dabei wurden Ausbreitmaß, Versteifungsbeginn und Versteifungsende ermittelt, wie oben für die Beispiele 5 bis 33 beschrieben.

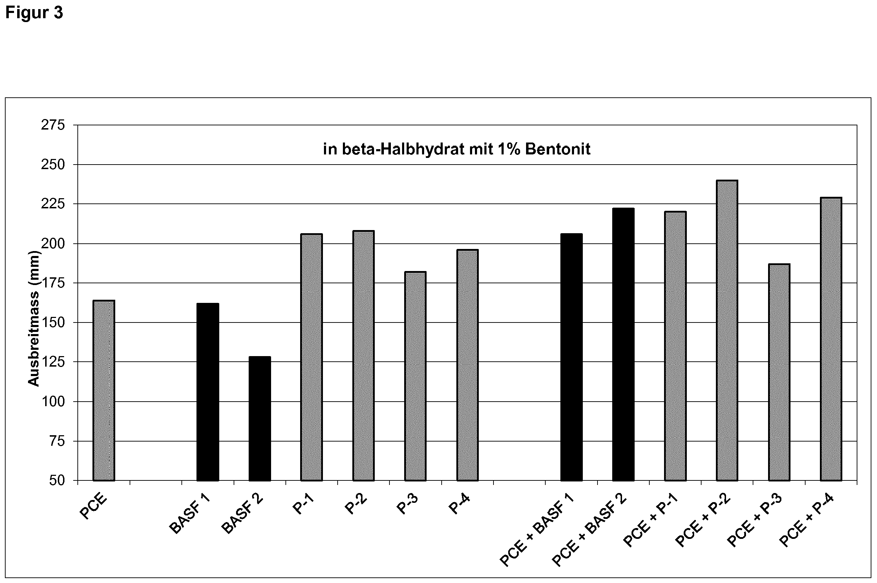

In einer Versuchsreihe der Ausführungsbeispiele 34 bis 46 wurden jeweils gleiche Mengenanteile der Kammpolymere eingesetzt. Die Ergebnisse sind in Tabelle 4 zusammengefasst und in Figur 3 grafisch dargestellt. Die Ergebnisse zeigen, dass die erfindungsgemäßen Kammpolymere ohne Polyetherseitenketten im Vergleich zu den analogen Kammpolymeren mit Polyetherseitenketten deutlich verbesserte Eigenschaften aufweisen. Die Gipszusammensetzungen mit erfindungsgemäßen Kammpolymere weisen deutlich höhere Ausbreitmaße auf. Versteifungsbeginn (VB) und Versteifungsende (VE) sind mit den erfindungsgemäßen Kammpolymere sind deutlich höher. Insgesamt belegen die Vergleichsversuche, dass die Kammpolymere ohne Polyetherseitenketten gegenüber bekannten Kammpolymeren mit Polyetherseitenketten deutlich verbesserte Eigenschaften als Verflüssiger und Dispergiermittel aufweisen.

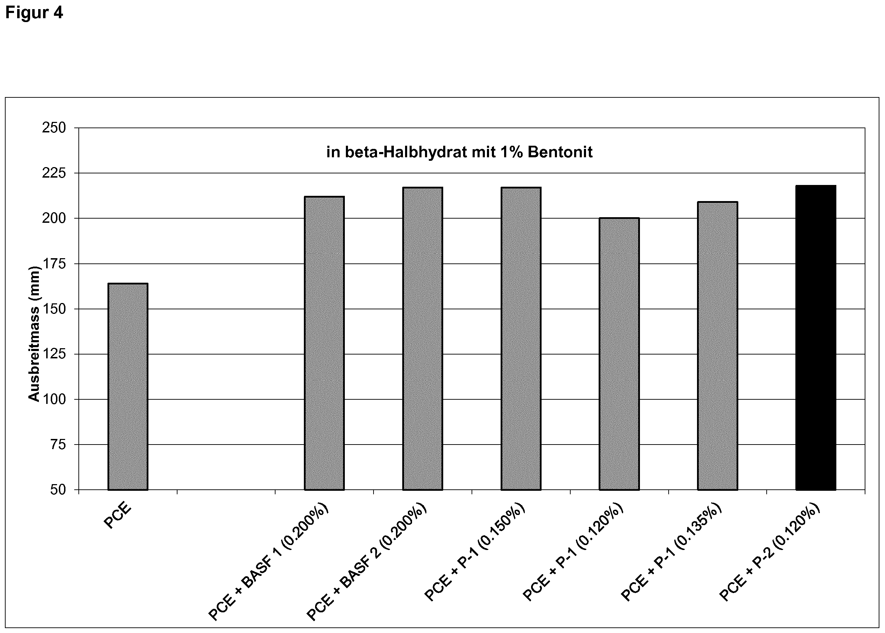

In einer weiteren Versuchsreihe der Ausführungsbeispiele 47 bis 53 wurden unterschiedliche Mengenanteile der erfindungsgemäßen Kammpolymere eingesetzt. Die Gipszusammensetzungen enthielten übliche Polycarboxylatethers (PCE). Die Ergebnisse sind in Tabelle 5 zusammengefasst und in Figur 4 grafisch dargestellt. Die Ergebnisse zeigen, dass schon deutlich geringere Mengen der erfindungsgemäßen Kammpolymere ausreichen, um einen verflüssigenden Effekt zu erzielen, der dem Kammpolymers V-1 oder V-2 der EP 2 463 317 A1 entspricht. Somit reichen deutlich geringere Mengen des erfindungsgemäßen Kammpolymers aus, um kationische Kammpolymere aus dem Stand der Technik zu ersetzen.

**Tabelle 2:**

| **Bsp.** | **Kat.** | **Bentonit %** | **β-Halbhydrat %** | **Polymer** | | **Zusatz für Aufziehen auf Ton** | | **ABM [mm]** | **VB [h:min:s]** | **VE [h:min:s]** | **Name** |
|---|---|---|---|---|---|---|---|---|---|---|---|
| | | | | **Name** | **Dos**. % | **Name** | **Dos**. % | | | | |
| 5 | V | 0,0% | 100,0% | - | 0,00 | - | 0,00 | 140 | 00:02:20 | 00:06:20 | - |
| 6 | V | 0,0% | 100,0% | - | 0,00 | PCE | 0,20 | 213 | 00:04:05 | 00:12:30 | PCE |
| 7 | V | 0,0% | 100,0% | - | 0,00 | Naph | 0,20 | 173 | 00:02:45 | 00:06:55 | Naph |
| 8 | V | 1,0% | 99,0% | - | 0,00 | PCE | 0,20 | 123 | 00:02:25 | 00:08:55 | PCE |
| 9 | V | 1,0% | 99,0% | - | 0,00 | Naph | 0,20 | 166 | 00:02:30 | 00:07:10 | Naph |
| 10 | | 1,0% | 99,0% | - | 0,00 | P-1 | 0,20 | 182 | 00:06:15 | 00:15:10 | P-1 |
| 11 | | 1,0% | 99,0% | - | 0,00 | P-2 | 0,20 | 158 | 00:02:45 | 00:14:15 | P-2 |
| 12 | | 1,0% | 99,0% | - | 0,00 | P-3 | 0,20 | 142 | 00:06:30 | 00:16:00 | P-3 |
| 13 | | 1,0% | 99,0% | - | 0,00 | P-4 | 0,20 | 150 | 00:02:45 | 00:07:05 | P-4 |
| 14 | V | 1,0% | 99,0% | PCE | 0,20 | - | 0,20 | 122 | 00:02:30 | 00:08:20 | PCE |
| 15 | V | 1,0% | 99,0% | | 0,00 | Naph | 0,20 | 166 | 00:02:30 | 00:07:10 | Naph |
| 16 | | 1,0% | 99,0% | PCE | 0,20 | P-1 | 0,20 | 196 | 00:11:30 | 00:20:10 | PCE + P-1 |
| 17 | | 1,0% | 99,0% | PCE | 0,20 | P-2 | 0,20 | 203 | 00:04:25 | 00:11:25 | PCE + P-2 |
| 18 | | 1,0% | 99,0% | PCE | 0,20 | P-3 | 0,20 | 139 | 00:08:55 | 00:21:00 | PCE + P-3 |
| 19 | | 1,0% | 99,0% | PCE | 0,20 | P-4 | 0,20 | 192 | 00:03:30 | 00:10:10 | PCE + P-4 |

| | | | | | | | | | | | |
|---|---|---|---|---|---|---|---|---|---|---|---|
| Naph = Naphthalinsulfonat; PCE = Polycarboxylatether | | | | | | | | | | | |

**Tabelle 3:**

| **Bsp.** | **Kat.** | **Bentonit %** | **β-Halbhydrat %** | **Polymer** | | **Zusatz für Aufziehen auf Ton** | | **ABM [mm]** | **VB [Std]** | **VE [Std.]** |
|---|---|---|---|---|---|---|---|---|---|---|
| | | | | **Typ** | **Dos. %** | **Typ** | **Dos. %** | | | |
| 20 | V | 0,0% | 100,0% | | 0,00 | - | 0,00 | 140 | 00:02:20 | 00:06:20 |
| 21 | V | 0,0% | 100,0% | | 0,00 | PCE | 0,20 | 213 | 00:04:05 | 00:12:30 |
| 22 | V | 0,0% | 100,0% | | 0,00 | Naph | 0,20 | 173 | 00:02:45 | 00:06:55 |
| 23 | V | 1,0% | 99,0% | PCE | 0,20 | PCE | 0,00 | 122 | 00:02:30 | 00:08:20 |
| 24 | | 1,0% | 99,0% | PCE | 0,20 | P-1 (0.2%) | 0,20 | 196 | 00:11:30 | 00:20:10 |
| 25 | | 1,0% | 99,0% | PCE | 0,20 | P-1 (0.15%) | 0,15 | 182 | 00:06:20 | 00:14:10 |
| 26 | | 1,0% | 99,0% | PCE | 0,20 | P-1 (0.1%) | 0,10 | 169 | 00:03:55 | 00:11:15 |
| 27 | | 1,0% | 99,0% | PCE | 0,20 | P-2 (0.2%) | 0,20 | 200 | 00:04:30 | 00:11:50 |
| 28 | | 1,0% | 99,0% | PCE | 0,20 | P-2 (0.1%) | 0,10 | 180 | 00:03:30 | 00:09:40 |
| 29 | | 1,0% | 99,0% | PCE | 0,20 | P-2 (0.05%) | 0,05 | 153 | 00:03:00 | 00:08:45 |
| 30 | | 3,0% | 97,0% | PCE | 0,20 | P-1 (0.2%) | 0,20 | 118 | 00:03:25 | 00:10:45 |
| 31 | | 3,0% | 97,0% | PCE | 0,20 | P-1 (0.4%) | 0,40 | 163 | 00:18:05 | 00:29:00 |
| 32 | | 3,0% | 97,0% | PCE | 0,20 | P-2 (0.2%) | 0,20 | 126 | 00:03:00 | 00:08:20 |
| 33 | | 3,0% | 97,0% | PCE | 0,20 | P-2 (0.4%) | 0,40 | 189 | 00:03:50 | 00:10:40 |

| | | | | | | | | | | |
|---|---|---|---|---|---|---|---|---|---|---|
| Naph = Naphthalinsulfonat; PCE = Polycarboxylatether | | | | | | | | | | |

**Tabelle 4:**

| **Bsp.** | **Kat.** | **Bentonit %** | **β-Halbhydrat %** | **Polymer** | | **Zusatz für Aufziehen auf Ton** | | **ABM [mm]** | **VB [h:min:s]** | **VE [h:min:s]** |
|---|---|---|---|---|---|---|---|---|---|---|
| | | | | **Typ** | **Dos. %** | **Typ** | **Dos. %** | | | |
| 34 | V | 1,0% | 99,0% | PCE | 0,20 | | 0,00 | 164 | 00:02:55 | 00:09:30 |
| 35 | V | 1,0% | 99,0% | | 0,00 | V-1 | 0,20 | 162 | 00:02:20 | 00:07:05 |
| 36 | V | 1,0% | 99,0% | | 0,00 | V-2 | 0,20 | 128 | 00:02:10 | 00:06:40 |
| 37 | | 1,0% | 99,0% | | 0,00 | P-1 | 0,20 | 206 | 00:09:50 | 00:20:00 |
| 38 | | 1,0% | 99,0% | | 0,00 | P-2 | 0,20 | 208 | 00:04:50 | 00:10:15 |
| 39 | | 1,0% | 99,0% | | 0,00 | P-3 | 0,20 | 182 | 00:09:40 | 00:22:30 |
| 40 | | 1,0% | 99,0% | | 0,00 | P-4 | 0,20 | 196 | 00:02:40 | 00:07:55 |
| 41 | V | 1,0% | 99,0% | PCE | 0,20 | V-1 | 0,20 | 206 | 00:03:55 | 00:12:00 |
| 42 | V | 1,0% | 99,0% | PCE | 0,20 | V-2 | 0,20 | 222 | 00:04:10 | 00:11:40 |
| 43 | | 1,0% | 99,0% | PCE | 0,20 | P-1 | 0,20 | 220 | 00:15:20 | 00:26:00 |
| 44 | | 1,0% | 99,0% | PCE | 0,20 | P-2 | 0,20 | 240 | 00:08:25 | 00:19:00 |
| 45 | | 1,0% | 99,0% | PCE | 0,20 | P-3 | 0,20 | 187 | 00:13:55 | 00:31:00 |
| 46 | | 1,0% | 99,0% | PCE | 0,20 | P-4 | 0,20 | 229 | 00:05:25 | 00:12:30 |

**Tabelle 5:**

| **Bsp.** | **Kat.** | **Bentonit %** | **β-Halbhydrat %** | **Polymer** | | **Zusatz für Aufziehen auf Ton** | | **ABM [mm]** | **VB [h:min:s]** | **VE [h:min:s]** |
|---|---|---|---|---|---|---|---|---|---|---|
| | | | | **Typ** | **Dos**. % | **Typ** | **Dos**. **%** | | | |
| 47 | V | 1,0% | 99,0% | PCE | 0,20 | - | - | 164 | 00:02:55 | 00:09:30 |
| 48 | V | 1,0% | 99,0% | PCE | 0,20 | V-1 | 0,200 | 212 | 00:04:00 | 00:12:10 |
| 49 | V | 1,0% | 99,0% | PCE | 0,20 | V-2 | 0,200 | 217 | 00:04:25 | 00:12:15 |
| 50 | | 1,0% | 99,0% | PCE | 0,20 | P-1 | 0,150 | 217 | 00:09:00 | 00:18:00 |
| 51 | | 1,0% | 99,0% | PCE | 0,20 | P-1 | 0,120 | 200 | 00:05:20 | 00:12:50 |
| 52 | | 1,0% | 99,0% | PCE | 0,20 | P-1 | 0,135 | 209 | 00:05:45 | 00:14:00 |
| 53 | | 1,0% | 99,0% | PCE | 0,20 | P-2 | 0,120 | 218 | 00:04:30 | 00:11:55 |

## Patentansprüche

1. Verwendung mindestens eines Kammpolymers, das Seitenketten umfasst, die mindestens eine kationische Gruppe aufweisen, und das keine Seitenketten mit Polyethergruppen umfasst, und das eine Hauptkette aufweist, die Carboxygruppen aufweist, als Dispergiermittel für hydraulisch abbindbare Zusammensetzungen.

2. Verwendung gemäß Anspruch 1, wobei die mindestens eine kationische Gruppe eine quartäre Ammoniumgruppe ist.

3. Verwendung gemäß mindestens einem der vorhergehenden Ansprüche, wobei die kationische Gruppe die Formel -N⁺R⁸R⁹R¹⁰, wobei R⁸, R⁹ und R¹⁰ unabhängig voneinander H, ein aliphatischer Kohlenwasserstoffrest mit 1 bis 20 C-Atomen, ein cycloaliphatischer Kohlenwasserstoffrest mit 5 bis 8 C-Atomen und/oder ein Arylrest mit 6 bis 14 C-Atomen ist.

4. Verwendung gemäß mindestens einem der vorhergehenden Ansprüche, wobei die kationische Gruppe Bestandteil einer monomeren Struktureinheit ist, die ausgewählt ist aus [2-(Acryloyloxy)-ethyl]-trimethyl-ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammoniumchlorid bzw. -methosulfat, [3-(Acryloylamino)-propyl]-trimethyammoniumchlorid, [3-(Methacryloylamino)-propyl]-trimethylammoniumchlorid und Diallyldimethylammoniumchlorid (DADMAC).

5. Verwendung gemäß mindestens einem der vorhergehenden Ansprüche, wobei das Kammpolymer ein zwitterionisches Kammpolymer ist, das Carboxygruppen aufweist, wobei die Hauptkette eine Polyacrylsäure, Polymethacrylsäure oder ein Copolymer aus Acrylsäure und Methacrylsäure ist.

6. Verwendung gemäß mindestens einem der vorhergehenden Ansprüche, wobei das Kammpolymer umfasst:
a) mindestens eine Säureeinheit A der Formel (I): 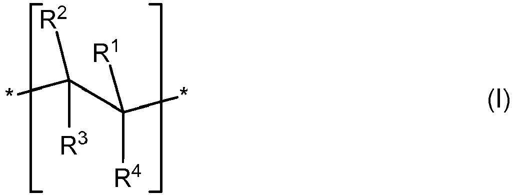
wobei jedes R¹, R² und R³ unabhängig von den anderen für H, -COOM,
-CH₂COOM oder eine Alkylgruppe mit 1 bis 5 Kohlenstoffatomen stehen,
jedes R⁴ unabhängig von den anderen für -COOM, -CH₂COOM,
-SO₂-OM, -O-PO(OM)₂ und/oder -PO(OM)₂ steht;
oder wobei R³ mit R⁴ einen Ring bildet zu -CO-O-CO-;
wobei M für H, ein Alkalimetall, ein Erdalkalimetall, Ammonium, ein Ammoniumkation, eine organische Ammoniumverbindung oder Mischungen davon steht;
mit der Massgabe, dass insgesamt ein einziger oder zwei der Reste R¹, R², R³ und R⁴ Säuregruppen sind,
wobei die Säureeinheit **A** bevorzugt eine Acrylsäureeinheit oder ein Salz davon und/oder eine Methacrylsäureeinheit oder ein Salz davon ist; und
b) mindestens einer Struktureinheit **K** der Formel (II) 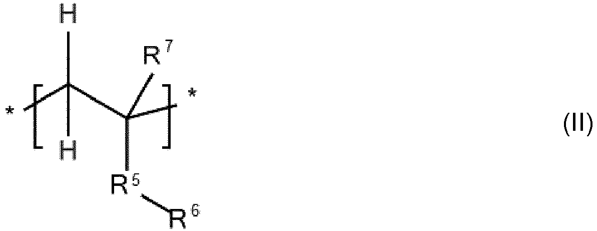 wobei
R⁵ unabhängig voneinander für -CO-O-R'-, -NH-R'-, -CO-NH-R'-, -O-, R',-O-R'- oder -R'-O-R'- steht, wobei R' eine C₁ bis C₂₀ Alkylidengruppe ist, die verzweigt oder unverzweigt sein kann, insbesondere eine Methylen-, Ethylen- oder Propylengruppe;
R⁶ unabhängig voneinander für eine kationische Gruppe steht, und
R⁷ unabhängig voneinander für H oder CH₃ steht.

7. Verwendung gemäß mindestens einem Ansprüche 5 oder 6, wobei das Kammpolymer 5 bis 100 Mol-% Struktureinheiten mit Seitenketten, die mindestens eine kationische Gruppe aufweisen, und 0 bis 95 Mol-% Struktureinheiten mit Säuregruppen umfasst, jeweils bezogen auf die Gesamtzahl aller monomeren Struktureinheiten in der Hauptkette des Kammpolymers.

8. Verwendung gemäß mindestens einem der Ansprüche 1 bis 4, wobei das Kammpolymer ein Homopolymer aus einem Monomer ist, das eine Seitenkette mit mindestens einer positiven Ladung aufweist.

9. Verwendung gemäß mindestens einem der vorhergehenden Ansprüche, wobei die hydraulisch abbindbare Zusammensetzung Zement oder Gips enthält.

10. Verwendung gemäß mindestens einem der vorhergehenden Ansprüche, wobei die hydraulisch abbindbare Zusammensetzung Ton enthält.

11. Verwendung gemäß mindestens einem der vorhergehenden Ansprüche, wobei die hydraulisch abbindbare Zusammensetzung mindestens ein weiteres Dispergiermittel enthält, insbesondere einen Polycarboxylatether ohne kationische Gruppen.

12. Hydraulisch abbindbare Zusammensetzung, enthaltend ein hydraulisch abbindbares Bindemittel und mindestens ein zwitterionisches Kammpolymer, umfassend eine Hauptkette, die Carboxygruppen aufweist, und Seitenketten, die eine kationische Gruppe aufweisen, wobei das Kammpolymer keine Seitenketten mit Polyethergruppen aufweist.

13. Formkörper, erhältlich durch Abbinden und Aushärten einer hydraulisch abbindbaren Zusammensetzung gemäß Anspruch 12.

14. Zwitterionisches Kammpolymer, umfassend eine Hauptkette, die Carboxygruppen aufweist, und Seitenketten, die mindestens eine kationische Gruppe aufweisen, wobei das Kammpolymer keine Seitenketten mit Polyethergruppen aufweist.

15. Verfahren zur Herstellung eines zwitterionischen Kammpolymers gemäß Anspruch 14, umfassend die Schritte:
(A) Bereitstellen eines Reaktionsgemischs, dass mindestens ein Monomer mit einer ungesättigten Gruppe und einer Carboxygruppe, und mindestens ein Monomer mit einer ungesättigten Gruppe und einer kationischen Gruppe enthält, und
(B) Polymerisieren des Reaktionsgemischs unter Erhalt des zwitterionischen Kammpolymers.

## Claims

1. A use of at least one comb polymer which comprises side chains which have at least one cationic group, and which does not comprise side chains which have polyether groups, and which has a main chain which has carboxyl groups, as a dispersant for hydraulically settable compositions.

2. The use according to claim 1, wherein the at least one cationic group is a quaternary ammonium group.

3. The use according to at least one of the preceding claims, wherein the cationic group has the formula - N+R8R9R10, in which R8, R9 and R10 independently stand for H, an aliphatic hydrocarbon residue having 1 to 20 C atoms, a cycloaliphatic hydrocarbon residue having 5 to 8 C atoms and/or an aryl residue having 6 to 14 C atoms.

4. The use according to at least one of the preceding claims, wherein the cationic group is a constituent of a monomeric structural unit, selected from [2-(acryloyloxy)-ethyl]-trimethylammonium chloride, [2-(acryloylamino)-ethyl]-trimethylammonium chloride, [2-(acryloyloxy)-ethyl]-trimethylammonium methosulfate, [2-(methacryloyloxy)-ethyl]-trimethylammonium chloride or - methosulfate, [3-(acryloylamino)-propyl]-trimethylammonium chloride, [3-(methacryloylamino)-propyl]-trimethylammonium chloride and diallyldimethylammonium chloride (DADMAC).

5. The use according to at least one of the preceding claims, wherein the comb polymer is a zwitterionic comb polymer which has carboxyl groups, wherein the main chain is a polyacrylic acid, a polymethacrylic acid or a copolymer of acrylic acid and methacrylic acid.

6. The use according to at least one of the preceding claims, wherein the comb polymer comprises:
a) at least one acid unit A of formula (I): 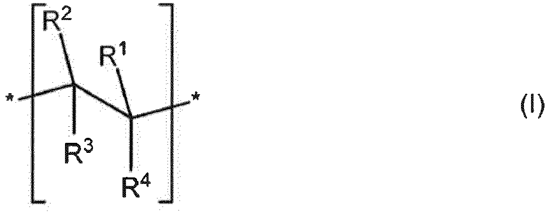
wherein R1, R2 and R3, independently of one another, stand for H, -COOM,
-CH2COOM or an alkyl group having 1 to 5 carbon atoms,
each R4 independently stands for -COOM, -CH2COOM, -SO2-OM, -O-PO(OM)2 and/or -PO(OM)2;
or wherein R3 and R4 together form a ring to -CO-O-CO-;
wherein M stands for H, an alkali metal, an alkaline earth metal, ammonium, an ammonium cation, an organic ammonium compound or mixtures thereof;
provided that a total of one or two of the groups R1, R2, R3 and R4 are acid groups,
wherein acid unit A is preferably an acrylic acid unit or a salt thereof and/or a methacrylic acid unit or a salt thereof; and
b) at least one structural unit K of formula (II) 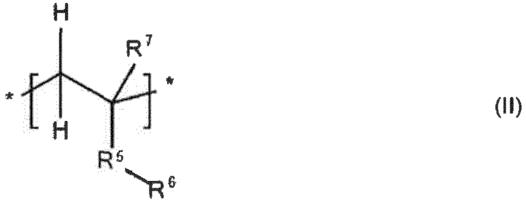 wherein
R5 independently stands for -CO-O-R'-, -NH-R'-, -CO-NH-R'-,
-O-, R' , -O-R' -, or -R' -O-R' -, with R' being a C1 to C20 alkylidene group, which can be branched or unbranched, in particular a methylene-, ethylene- or propylene group;
R6 independently stands for a cationic group, and
R7 independently stands for H or CH3.

7. The use according to at least one of claims 5 or 6, wherein the comb polymer comprises 5 to 100 mol% structural units having side chains which have at least one cationic group, and 0 to 95 mol% structural units having acid groups, each relative to the total number of all monomeric structural units in the main chain of the comb polymer.

8. The use according to at least one of claims 1 to 4, wherein the comb polymer is a homopolymer of a monomer which has a side chain having at least one positive charge.

9. The use according to at least one of the preceding claims, wherein the hydraulically settable composition contains cement or gypsum.

10. The use according to at least one of the preceding claims, wherein the hydraulically settable composition contains clay.

11. The use according to at least one of the preceding claims, wherein the hydraulically settable composition contains at least one additional dispersant, in particular a polycarboxylate ether without cationic groups.

12. A hydraulically settable composition containing a hydraulically settable binder and at least one zwitterionic comb polymer, comprising a main chain which has carboxyl groups, and side chains which have a cationic group, wherein the comb polymer does not comprise side chains having polyether groups.

13. A molding, obtainable by setting and curing a hydraulically settable composition according to claim 12.

14. A zwitterionic comb polymer comprising a main chain which has carboxyl groups and side chains which have at least one cationic group, wherein the comb polymer does not comprise side chains having polyether groups.

15. A method for producing a zwitterionic comb polymer according to claim 14, comprising the following steps:
(A) preparing a reaction mixture which contains at least one monomer having an unsaturated group and a carboxyl group, and at least one monomer having an unsaturated group and a cationic group, and
(B) polymerizing the reaction mixture to obtain the zwitterionic comb polymer.

## Revendications

1. Utilisation d'au moins un polymère en peigne qui comprend des chaînes latérales qui comportent au moins un groupe cationique, et qui ne comprend pas de chaînes latérales comportant des groupes polyéther, et qui comporte une chaîne principale qui comporte des groupes carboxy, en tant que dispersant pour des compositions durcissables par prise hydraulique.

2. Utilisation selon la revendication 1, dans laquelle ledit au moins un groupe cationique est un groupe ammonium quaternaire.

3. Utilisation selon au moins l'une quelconque des revendications précédentes, dans laquelle le groupe cationique présente la formule -N⁺R⁸R⁹R¹⁰, dans laquelle R⁸, R⁹ et R¹⁰ représentent chacun indépendamment H, un radical hydrocarboné aliphatique ayant de 1 à 20 atomes de carbone, un radical hydrocarboné cycloaliphatique ayant de 5 à 8 atomes de carbone et/ou un radical aryle ayant de 6 à 14 atomes de carbone.

4. Utilisation selon au moins l'une quelconque des revendications précédentes, dans laquelle le groupe cationique fait partie d'une unité structurale monomère qui est choisie parmi le chlorure de [2-(acryloyloxy)-éthyl]triméthyl-ammonium, le chlorure de [2-(acryloylamino)-éthyl]triméthyl-ammonium, le méthosulfate de [2-(acryloyloxy)-éthyl]triméthyl-ammonium, le chlorure ou méthosulfate de [2-(méthacryloyloxy) - éthyl]triméthyl-ammonium, le chlorure de [3-(acryloylamino)-propyl]triméthylammonium, le chlorure de [3-(méthacryloylamino)-propyl]triméthylammonium et le chlorure de diallyldiméthylammonium (DADMAC).

5. Utilisation selon au moins l'une quelconque des revendications précédentes, dans laquelle le polymère en peigne est un polymère en peigne zwitterionique qui comporte des groupes carboxy, dans lequel la chaîne principale est un poly (acide acrylique), un poly (acide méthacrylique) ou un copolymère d'acide acrylique et d'acide méthacrylique.

6. Utilisation selon au moins l'une quelconque des revendications précédentes, dans laquelle le polymère en peigne comprend :
a) au moins une unité acide A de formule (I) : 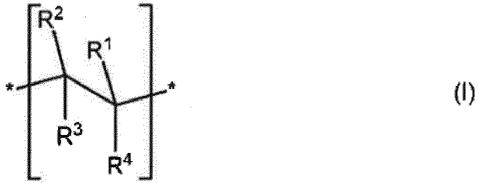
dans laquelle les radicaux R¹, R² et R³ représentent chacun indépendamment des autres H, -COOM,, -CH₂COOM ou un groupe alkyle ayant de 1 à 5 atomes de carbone,
chaque radical R⁴ représente indépendamment des autres -COOM, -CH₂COOM, -SO₂-OM, -O-PO(OM)₂ et/ou -PO(OM)₂ ;
ou dans laquelle R³ forme avec R⁴ un cycle fermé en -CO-O-CO- ;
M représentant H, un atome de métal alcalin, un atome de métal alcalino-terreux, un groupe ammonium, un cation ammonium, un composé organique d'ammonium ou des mélanges de ceux-ci ;
étant entendu qu'au total un seul ou deux des radicaux R¹ R², R³ et R⁴ sont des groupes acides,
l'unité acide **A** étant de préférence une unité acide acrylique ou un sel de celui-ci et/ou une unité acide méthacrylique ou un sel de celui-ci ; et
b) au moins une unité structurale **K** de formule (II) 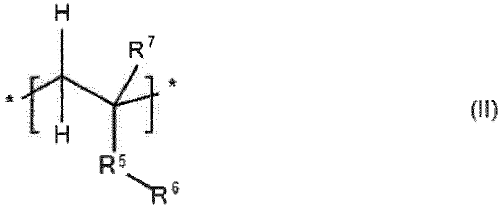 dans laquelle
R⁵ représente chaque fois indépendamment -CO-O-R'-, -NH-R'-, -CO-NH-R'-, -O-, R', -O-R'- ou -R'-O-R'-, R' étant un groupe alkylidène en C₁-C₂₀ qui peut être ramifié ou non ramifié, en particulier un groupe méthylène, éthylène ou propylée ;
R⁶ représente chaque fois indépendamment un groupe cationique, et
R⁷ représente chaque fois indépendamment H ou CH₃.

7. Utilisation selon au moins l'une quelconque des 5 et 6, dans laquelle le polymère en peigne comprend 5 à 100 % en moles d'unités structurales comportant des chaînes latérales qui comportent au moins un groupe cationique, et 0 à 95 % en moles d'unité structurales comportant des groupes acides, chaque fois par rapport au nombre total de toutes les unités structurales monomères dans la chaîne principale du polymère en peigne.

8. Utilisation selon au moins l'une quelconque des revendications 1 à 4, dans laquelle le polymère en peigne est un homopolymère d'un monomère qui comporte une chaîne latérales ayant au moins une charge positive.

9. Utilisation selon au moins l'une quelconque des revendications précédentes, dans laquelle la composition durcissable par prise hydraulique contient du ciment ou du plâtre.

10. Utilisation selon au moins l'une quelconque des revendications précédentes, dans laquelle la composition durcissable par prise hydraulique contient de l'argile.

11. Utilisation selon au moins l'une quelconque des revendications précédentes, dans laquelle la composition durcissable par prise hydraulique contient au moins un autre dispersant, en particulier un éther de polycarboxylate sans groupes cationiques.

12. Composition durcissable par prise hydraulique, contenant un liant durcissable par prise hydraulique et au moins un polymère en peigne zwitterionique comprenant une chaîne principale qui comporte des groupes carboxy, et des chaînes latérales qui comportent un groupe cationique, le polymère en peigne ne comportant pas de chaînes latérales comportant des groupes polyéther.

13. Corps modulé, pouvant être obtenu par prise et durcissement d'une composition durcissable par prise hydraulique selon la revendication 12.

14. Polymère en peigne zwitterionique, comprenant une chaîne principale qui comporte des groupes carboxy, et des chaînes latérales qui comportent au moins un groupe cationique, le polymère en peigne ne comportant pas de chaînes latérales comportant des groupes polyéther.

15. Procédé pour la préparation d'un polymère en peigne zwitterionique selon la revendication 14, comprenant les étapes :
(A) disposition d'un mélange réactionnel qui contient au moins un monomère comportant un groupe insaturé et un groupe carboxy, et au moins un monomère comportant un groupe insaturé et un groupe cationique, et
(B) polymérisation du mélange réactionnel, avec obtention du polymère en peigne zwitterionique.
